# EUROPÄISCHE PATENTSCHRIFT

(11) **EP 1 841 695 B1**
(45) Veröffentlichungstag und Bekanntmachung des Hinweises auf die Patenterteilung: **12.03.2014**
(21) Anmeldenummer: 06706334.7
(22) Anmeldetag: 20.01.2006
(51) Int. Cl.: C02F 1/16, C02F 103/08

(54) **SYSTEM UND VERFAHREN ZUR EINSATZPLANUNG, PROZESSÜBERWACHUNG, SIMULATION UND OPTIMIERUNG EINER KOMBINIERTEN STROMERZEUGUNGS- UND WASSERENTSALZUNGSANLAGE**
SYSTEM AND METHOD FOR PLANNING THE OPERATION OF, MONITORING PROCESSES IN, SIMULATING, AND OPTIMIZING A COMBINED POWER GENERATION AND WATER DESALINATION PLANT
SYSTEME ET PROCEDE DE PLANIFICATION, DE SURVEILLANCE DE PROCESSUS, DE SIMULATION ET D'OPTIMISATION D'UNE INSTALLATION COMBINEE DE PRODUCTION DE COURANT ET DE DESSALEMENT D'EAU

(30) Priorität: 28.01.2005 DE 102005004233
(43) Veröffentlichungstag der Anmeldung: 10.10.2007
(73) Patentinhaber: ABB Technology AG, 8050 Zürich (CH)
(72) Erfinder: GAUDER, Markus, 68766 Hockenheim (DE); SCHMITT, Rolf, 67146 Deidesheim (DE); LAUXTERMANN, Stefan, 32457 Porta Westfalica (DE)
(74) Vertreter: Miller, Toivo
(86) Internationale Anmeldenummer: PCT/EP2006/000506
(87) Internationale Veröffentlichungsnummer: WO 2006/079483

(56) Entgegenhaltungen:
- WO-A-03/038685
- KRAUSE H ET AL: "Improvement of operation and availability of MSF plants" DESALINATION, ELSEVIER, AMSTERDAM, NL, Bd. 107, Nr. 1, September 1996 (1996-09), Seiten 59-74, XP004019206 ISSN: 0011-9164
- ALATIQI I ET AL: "Process control in water desalination industry: an overview" DESALINATION, ELSEVIER, AMSTERDAM, NL, Bd. 126, Nr. 1-3, 1. November 1999 (1999-11-01), Seiten 15-32, XP004190178 ISSN: 0011-9164
- CARTA J A ET AL: "Operational analysis of an innovative wind powered reverse osmosis system installed in the Canary Islands" SOLAR ENERGY, PERGAMON PRESS. OXFORD, GB, Bd. 75, Nr. 2, August 2003 (2003-08), Seiten 153-168, XP004465034 ISSN: 0038-092X
- GAMBLER A ET AL: "Dynamic modelling of MSF plants for automatic control and simulation purposes: a survey", DESALINATION, ELSEVIER, AMSTERDAM, NL, vol. 166, 15 August 2004 (2004-08-15), pages 191-204, XP004655150, ISSN: 0011-9164, DOI: 10.1016/J.DESAL.2004.06.073

## Beschreibung

Die Erfindung betrifft ein System und ein Verfahren zur Einsatzplanung, Prozessüberwachung, Simulation und/oder Optimierung einer kombinierten technischen Anlage, gemäß den Ansprüchen 1 und 16 und ist geeignet für die Prozessüberwachung, Simulation und Optimierung in kombinierten Stromerzeugungs- und Wasserentsalzungsanlagen.

Wasserentsalzungsanlagen bestehen typischerweise aus einer oder mehreren Einheiten, die, abhängig von der Anlagenstruktur, mit Kraftwerken oder einzelnen Kraftwerksanlageneinheiten, im folgenden auch Stromerzeugungsanlage genannt, kombiniert werden. Beispielsweise wird für die thermische Wasserentsalzung Abdampf aus den Kraftwerken oder den Kraftwerksblöcken genutzt, um Meerwasser oder Brackwasser zu entsalzen.

Die Heiz- oder Kombikraftwerke zur Stromerzeugung erzeugen den für die Wasserentsalzung benötigten Dampf und/oder Strom, abhängig von der jeweils genutzten Entsalzungsprozesstechnologie, welche sowohl die thermische als auch die membranbasierte Wasserentsalzung abdeckt.

Thermischen Prozesstechnologien zur Wasserentsalzung sind beispielsweise Multi Stage Flash (MSF), Multi Effect Distillation (MED) und die Thermal Vapour Compression (TVC).

Membranbasierten Entsalzungsverfahren sind beispielsweise die Umkehrosmose (Reverse Osmosis RO), die Nanofiltration (NF) oder die Ultrafiltration (UF).

Zur Stromerzeugung werden neben den ölbefeuerten auch gas- und kohlebefeuerte Kraftwerksanlagen eingesetzt.

Zur Senkung von Investitionskosten und Betriebskosten werden die Wasserentsalzungseinheiten mit den Stromerzeugungseinheiten derart gekoppelt, dass der Abdampf aus dem Kraftwerk für die Entsalzung nutzbar ist. Die benötigte Versorgung der Entsalzungsanlagen mit Strom ist durch eine Kopplung der Anlage mit einem Stromnetz oder durch eine direkte Kopplung mit dem Kraftwerk realisierbar.

Die Simulation und Optimierung für die Einsatzplanung und die Prozessführung in kombinierten Stromerzeugungs- und Wasserentsalzungsanlagen umfasst folgende Aspekte:
- veränderte Lastanforderungen für die Stromerzeugungsanlage und/oder die Wasserentsalzungsanlage,
- eine Umstellung zwischen Vollast und Teillast bei der Stromerzeugung,
- eine Erstellung neuer Fahrpläne bedingt durch den Ausfall einer Stromerzeugungsanlage und/oder Wasserentsalzungsanlage,
- eine Erstellung neuer Fahrpläne bedingt durch die Instandsetzung einer Stromerzeugungsanlage und/oder Wasserentsalzungsanlage,
- eine Umstellung des Produktionsziels,
- eine Erstellung von kostenoptimierten Einsatzplänen für kurzfristige Zeiträume,
- eine Erstellung von kostenoptimierten Einsatzplänen für mittelfristige Zeiträume,
- eine Erstellung von kostenoptimierten Einsatzplänen für langfristige Zeiträume beispielsweise für den Fall der geplanten Anlagenerweiterungen,
- eine Optimierung des Wassermischungsvorgangs bei Einsatz von verschiedenen Wasserentsalzungsprozesstechnologien,
- eine Optimierung der Anzahl der An- und Abfahrvorgänge der Stromerzeugungs- und Wasserentsalzungsanlagen,
- eine Optimierung der Speicherung des produzierten entsalzten Wassers,
- eine Arbeitspunktoptimierung mittels Prozessoptimierung im Fall von Degradierungen in der Stromerzeugungsanlage und/oder Wasserentsalzungsanlage oder veränderten Umgebungsbedingungen, und
- eine Analyse des Einflusses verschiedener Betriebszustände auf das Produktionsziel mittels Simulation.

Bekannte Verfahren zur Simulation und Optimierung werden dabei für die Stromerzeugungs- und Wasserentsalzungsanlagen jeweils getrennt, aber nicht kombiniert für gekoppelte Stromerzeugungs- und Meerwasserentsalzungsanlagen und ohne die Nutzung von Synergien und Möglichkeiten für die kombinierte Anwendung ausgeführt.

Kennwerte wie Produktionskosten oder Produktionsmengen werden entweder für die Stromerzeugungsanlage oder die Wasserentsalzungsanlage getrennt ermittelt, jedoch nicht für die gesamte technische Anlage, so dass eine Analyse des Betriebs einer kombinierten Anlage nur durch aufwendiges manuelles Zusammenführen mehrerer Leistungskennwerte möglich ist.

Die gegenwärtig eingesetzten Simulations- und Optimierungsverfahren stellen keine ausreichenden Simulations- und Optimierungslösungen für kombinierte Anlagen unter anderem zur Betriebskostenermittlung, der Berechnung von Kennwerten, der Ermittlung von optimalen Arbeitspunkten oder der Auslegung von Anlagen zur Verfügung, wie sie vom Betreiber gefordert werden.

Durch die Optimierung des Anlagendesigns und der Anlagenauslegung können die Invesititions- und Betriebskosten gesenkt werden. Neu eingesetzte oder weiterentwickelte Materialien und Chemikalien zur Verhinderung von Belag- und Schaumbildung sind für die Ausnutzung der Betriebsgrenzen der Anlagen Vorraussetzung. Diese Optimierungen beziehen sich im Wesentlichen auf die Phase der Anlagenplanung. Für die Optimierung des Anlagenbetriebs, die notwendig wird beispielsweise durch auftretende Degradierungen oder sich verändernde Umgebungsbedingungen wie die Temperatur des zu entsalzenden Wassers, werden entsprechende Simulations- und Optimierungslösungen benötigt, um die gestellten Anforderungen erfüllen zu können.

In Gambier A. et al: "Dynamic modelling of MSF plants for automatic control and simulation purposes: a survey", Desalination, Elsevier, Amsterdam, Bd. 166, 15. August 2004, S. 191-204, werden verschiedene dynamische Modelle einer MSF-Entsalzunganlage hinsichtlich ihrer Eignung für Simulations- und Regelungszwecke beschrieben, wobei Stromerzeugung und Wasserentsalzung getrennt betrachtet werden.

Ein weitergehender Ansatz ist bekannt aus Krause H. et al: "Improvement of operation and availability of MSF plants", Desalination, Elsevier, Amsterdam, Bd. 107, Nr. 1, September 1996, S. 59-74, welches sich mit der Verbesserung des Betriebs und der Verfügbarkeit einer MSF-Entsalzungsanlage beschäftigt. Dazu wird vorgeschlagen, neben der Verbesserung der direkten Prozesssteuerung und -regelung auch übergeordnete Verfahren des Anlagenmanagements anzuwenden. Dabei werden aus gemessenen Prozessdaten Performance Indicators ermittelt und zur Prozessüberwachung verwendet. Darüber hinaus wird eine Optimierung der gesamten Anlage vorgeschlagen hinsichtlich Energieverlusten, Betriebsdauer, Energieverbrauch und Lebensdauer.

Ausgehend vom Stand der Technik liegt der Erfindung die Aufgabe zugrunde, ein System und ein Verfahren zur Einsatzplanung, Prozessüberwachung, Simulation und/oder Optimierung einer kombinierten technischen Anlage, insbesondere einer kombinierten Stromerzeugungs- und Wasserentsalzungsanlagenanlage, anzugeben, wodurch vorgenannte Nachteile des Standes der Technik überwunden werden und die durch die Abhängigkeit der Wasserentsalzungsanlagen von der Dampf- und Stromversorgung aus den Stromerzeugungsanlagen oder Kesseln für die Dampfer zeugung bedingte Anlagenfahrweise nach einer Änderung des Anlagenzustands so anpassbar ist, dass die Anlage im neuen Zustand wieder optimal betrieben wird.

Diese Aufgabe wird erfindungsgemäß, durch ein System der eingangs genannten Art mit den im Anspruch 1 angegebenen Merkmalen gelöst. Vorteilhafte Ausgestaltungen, Verbesserungen des erfindungsgemäßen Systems und ein Verfahren sind in weiteren Ansprüchen und in der Beschreibung angegeben.

Erfindungsgemäß umfasst das System zur Einsatzplanung, Prozessüberwachung, Simulation und/oder Optimierung einer mehrere miteinander kombinierbare Einheiten umfassende technischen Anlage, insbesondere eine kombinierten Stromerzeugungs- und Wasserentsalzungsanlagenanlage, wenigstens ein Modul zur Einsatzplanung, wenigstens ein Modul zur Prozesssimulation und wenigstens ein Modul zur Prozessoptimierung.

In einer Ausgestaltung des erfindungsgemäßen Systems umfasst das Modul zur Prozesssimulation entsprechenden Optimierungsmöglichkeiten zur Prozessoptimierung, wodurch ein zusätzliches Modul zur Prozessoptimierung nicht erforderlich ist.

In den Modulen zur Einsatzplanung, Prozesssimulation und Prozessoptimierung sind Komponenten zur Modellierung, Simulation und Optimierung der technischen Anlage hinterlegt, wobei die Modelle der technischen Anlage an spezifische Anforderungen der technischen Anlage anpassbar sind und die Komponenten entsprechend den Anforderungen von Einsatzplanung, Simulation und Prozessoptimierung unterschiedlich ausgebildet sind. Die Unterschiede beziehen sich im Wesentlichen auf die den Komponenten hinterlegten Modelle.

Den für die Modellierung benötigten Komponenten sind entsprechende Modelle, wie beispielsweise physikalische und mathematische Beschreibungen, hinterlegt. Ein Anlagenmodell wird beispielsweise graphisch durch Verknüpfen verschiedener Komponenten erstellt und bildet somit die physikalisch-mathematischen Beziehungen innerhalb der modellierten Anlage automatisch ab. Komponenten zur Stromerzeugung sind beispielsweise Pumpen, eine Turbine oder ein Kessel. Komponenten aus dem Bereich der Wasserentsalzung sind beispielsweise die Einheiten zur Wasserentsalzung, Wasserspeicher zur Zwischenspeicherung von entsalztem Wasser oder Pumpen. Abhängig vom jeweils hinterlegten Modell kann auch eine zeitlich begrenzte Speicherung, zum Beispiel über einen Zeitraum von 24 Stunden, berücksichtigt werden.

Neben der Wasserspeicherung spielt auch eine Wassermischungskomponente im Fall der Einsatzplanung eine wesentliche Rolle. Da mit den verschiedenen Prozesstechnologien unterschiedliche Wasserqualitäten und -Quantitäten erzeugt werden (so ist das Wasser, das mittels Multi Stage Flash gewonnen wird sehr viel reiner als Wasser aus der Umkehrosmose), ist auch eine Simulation und Optimierung hinsichtlich der Mischbarkeit des Wassers über die Einsatzplanung der Anlagen mit dem erfindungsgemäßem System ausführbar. Die dafür notwendigen Anforderungen werden vom Modul zur Einsatzplanung abgedeckt.

Wird eine Einsatzplanung für Hybrid-Anlagen durchgeführt, in der zwei oder mehrere verschiedene Prozesstechnologien für Wasserentsalzung in einer Anlage zum Einsatz kommen, weist das produzierte und entsalzte Wasser eine unterschiedliche Qualität hinsichtlich des Salzgehaltes auf. Da jedoch vorgegebene Qualitätsstandards zu erfüllen sind, ist die Verwendung einer Wassermischungskomponente notwendig, welche die Grenzen hinsichtlich der Wasserqualität definiert. Um die definierten Grenzen nicht zu über- bzw. unterschreiten, berücksichtigt die Einsatzplanung eine Wassermischungskomponente, um Einheiten der Stromerzeugungs- und Wasserentsalzungsanlagenanlage entsprechend der vorgegebenen Grenzen zu fahren und somit ein Wasser produziert werden kann, dessen Qualität innerhalb der definierten Grenzen liegt.

Das Modul zur Einsatzplanung ist dafür eingerichtet, optimierte Fahrpläne, nach denen dann die Anlage gefahren wird, für die einzelnen Einheiten und/oder die gesamte technische Anlage zu ermitteln. Es enthält alle notwendigen Komponenten inklusive der benötigten Modelle, die für die kombinierte Einsatzplanung der Stromerzeugungs- und Wasserentsalzungsanlage benötigt wird.

Die Module zur Prozesssimulation und Prozessoptimierung werden genutzt, um beispielsweise optimale Arbeitspunktvorgaben für charakteristische Betriebswerte der jeweiligen Einheiten und/oder der gesamten technischen Anlage zu ermitteln oder den Einfluss eines oder mehrerer Prozessparameter bespielsweise auf das Produktionsergebnis zu simulieren.

Die Prozessoptimierung wird genutzt, um die Arbeitspunkte entsprechender charakteristischer Betriebswerte wie bespielsweise die "Top Brine Temperture (TBT)" oder die erzeugte Destillatmenge verschiedener Einheiten (thermische Wasserentsalzung), im folgenden auch Anlagenteile genannt, zu optimieren, so dass die Stromerzeugung als auch die Wasserentsalzung entsprechend eines definierten Optimierungsziels optimal betrieben werden. Die Optimierungsziele der Prozessoptimierung sind dazu flexibel festlegbar.

Alle für die Prozessoptimierung der kombinierten technischen Anlage relevanten Aspekte, wie beispielsweise Kostenfaktoren, umwelttechnische Randbedingungen, Vertragsbedingungen, wie beispielsweise Verträge für den Brennstoffbezug oder vertraglich zugesicherte Menge an zu lieferendem Wasser, und betriebliche Aspekte, wie zum Bespiel die Verfügbarkeit von Anlageneinheiten, werden vom erfindungsgemäßem System berücksichtigt. Durch die Zusammenführung der Optimierungen für Stromerzeugungs- und Wasserentsalzungsanlagen sowie den Einsatz der verschiedenen Optimierungslösungen der einzelnen Anlagenteile ist ein optimaler und effizienter Anlagenbetrieb durchführbar. Veränderungen,des Anlagenzustandes werden durch die übergreifende Simulation und Optimierung der Anlagenfahrweise berücksichtigt.

Die Simulation mittels des Moduls zur Prozesssimulation wird genutzt, um durch Änderung von einflussreichen Parametern die Auswirkung auf das Verhalten der Gesamtanlage zu untersuchen. Beispielsweise kann simuliert werden, welchen Einfluss eine Veränderung der Wärmedurchgangskoeffizienten auf die Produktion von entsalztem Wasser hat.

In den Modulen zur Einsatzplanung, zur Prozessoptimierung und zur Prozesssimulation sind Bibliotheken mit Komponenten, die für die Konfiguration verschiedener Anlagen genutzt werden, abgelegt, wobei die Bibliotheken beliebig erweiterbar und/oder modifizierbar sind.

Die miteinander in Beziehung stehenden Module zur Einsatzplanung, Prozesssimulation und Prozessoptimierung wirken über wenigstens eine Schnittstelle mit einer Informationsverwaltungsschicht zusammen, welche aktuell gemessene sowie historische Prozessdaten für die Module zur Einsatzplanung, Prozesssimulation und Optimierung bereitstellt, diese Prozessdaten in die Module transferiert und die in den Modulen ermittelten Ergebnisse der Informationsverwaltungsschicht zur weiteren Verarbeitung zuführt.

Die ermittelten Kenn- und/oder Betriebswerte charakterisieren die Wasserentsalzungseinheiten und Kraftwerksanlageneinheiten. Die Kenn- und Betriebswerte, die sowohl stromerzeugungs- und entsalzungsanlagenspezifische Kennwerte als auch eine Kombination aus diesen Kennwerten umfassen, werden basierend auf den aktuellen gemessenen Prozessdaten ermittelt und über zur Verfügung stehende Visualisierungs- und Dokumentationsmodule - im folgenden auch als Anzeigemodule bezeichnet - visualisiert, archiviert und/oder dokumentiert. Gegebenenfalls werden auch historische Daten zur Simulation und Optimierung verwendet. Des Weiteren werden auch Daten, wie neue Lastanforderungen den Modulen, zur Simulation und Optimierung zur Verfügung gestellt.

Die ermittelten Kenn- und Betriebswerte berücksichtigen weiterhin veränderte Lastanforderungen für die Einheiten der technischen Anlage, neu erstellte Fahrpläne bedingt durch den Ausfall und/oder Instandsetzung von Einheiten der technischen Anlage, Umstellungen eines Produktionsziels und/oder neu erstellte Einsatzpläne.

Das erfindungsgemäße System ist insbesondere zur Einsatzplanung, Prozessüber wachung, Simulation und/oder Optimierung in kombinierten gas- öl- oder kohlebefeuerten Stromerzeugungs- und thermischen oder membranbasierten Wasserentsalzungsanlagenanlagen geeignet.

In einer vorteilhaften Ausgestaltung der Erfindung ist vorgesehen, dass mittels eines Prozessüberwachungsmoduls, welches mit der Informationsverwaltungsschicht zusammenwirkt, eine Ermittlung von charakteristischen Leistungskennwerten, die zur ständigen Überwachung des Betriebs sowie zur nachfolgenden Dokumentation und Auswertung nutzbar sind, auszuführen. Die Ermittlung der Leistungskennwerte erfolgt entweder in der Informationsverwaltungsschicht oder in dem an die Informationsverwaltungsschicht angeschlossenem Prozessüberwachungsmodul. Die Leistungskennwerte, die sowohl stromerzeugungs- und entsalzungsanlagenspezifische aber auch kombinierte Kennwerte umfassen, werden basierend auf aktuellen gemessenen Prozessdaten, die über die Informationsverwaltungsschicht zur Verfügung gestellt werden, ermittelt und über die zur Verfügung stehenden Visualisierungs- und Dokumentationsmodule visualisiert und dokumentiert. Die Überwachung der Leistungskennwerte ist des Weiteren für die Echtzeitbestimmung von für den Betrieb der technischen Anlage wichtigen vordefinierten Parametern einsetzbar.

In einer bevorzugten Ausführungsform der Erfindung ist eine Analysefunktionalität in der Informationsverwaltungsschicht oder dem Prozessüberwachungsmoduls vorgesehen, welche durch Verwendung der kombinierten ermittelten charakteristischen Leistungskennwerte eine Analyse des Anlagenbetriebs ausführt. So ist es möglich, dass im Falle der Abweichung vom optimalen Anlagenbetrieb ein Alarm erzeugt wird, durch den auf diese Veränderung hingewiesen wird. Als Folge kann eine Optimerung durchgeführt werden, so dass der Anlagenbetrieb wieder in einen optimalen Bereich innerhalb vordefinierter Grenzen zurückgeführt wird. Die Ausführung der Optimierung kann automatisch im Falle des Auftretens eines Alarms oder manuell durch den Bediener gestartet werden.

In einer weiteren vorteilhaften Ausgestaltung der Erfindung ist vorgesehen, dass die Informationsverwaltungsschicht mit einem Prognosemodul zur Vorhersage unter anderem der Verbauchswerte von Strom, Wärme und Wasser zusammenwirkt. Beispielsweise ist das Prognosemodul dafür vorgesehen, entsprechende Prognosen für den Strom-, Wärme- und/oder Wasserverbrauch zu erstellen. Diese Verbrauchsdaten werden genutzt, um die Lastprofile zu erstellen, die für die Einsatzplanung benötigt werden. Das Prognosemodul bezieht einen Teil der benötigten Daten über den aktuellen Verbrauch und/oder Zustand der technischen Anlage über die Informationsverwaltungsschicht. Weitere Informationen, wie beispielweise die Wetterprognose, werden aus anderen Systemen, wie zum Beispiel dem Internet, zur Verfügung gestellt. Nach der Ausführung einer Prognose mittels des Prognosemoduls werden die ermittelten Daten in die Informationsverwaltungsschicht zurückgeschrieben und stehen somit dem Optimierungsmodul für die Einsatzplanung über die bereits angeführten Schnittstellen zur weiteren Verarbeitung zur Verfügung.

Die Schnittstellen zwischen der Informationsverwaltungsschicht und den Modulen als auch die Schnittstellen zum Prozess, beispielsweise zu einem Prozessleitsystem, sind als Standardschnittstellen oder proprietäre Schnittstellen ausgeführt.

Das erfindungsgemäße System ist weiterhin dafür vorgesehen, die Kenn- und Betriebswertermittlung in der Informationsverwaltungsschicht und/oder in den an die Informationsverwaltungsschicht angeschlossenen Module zur Einsatzplanung, Optimierung, Simulation und Prozessüberwachung der technischen Anlage ereignisbedingt, zyklisch und/oder manuell zu aktivieren.

Die Kombination der Wasserentsalzungsanlage mit dem Kraftwerk bietet insbesondere Optimierungspotentiale hinsichtlich der Investitionskosten und der Betriebskosten. Investitionskosten werden durch Nutzung der gemeinsamen Infrastruktur während der Planungsphase optimiert, während sich bei den Betriebskosten, neben der Verwendung von neuartigen Materialien oder Chemikalien, der Einsatz einer Online-Simulations- und Optimierungslösung für die kombinierte Anlage anbietet.

Durch die Zusammenführung der Komponenten der technischen Anlage in den Modulen zur Einsatzplanung, Prozesssimulation und Prozessoptimierung und somit die Erweiterung der Simulation und Optimierung für die übergreifenden Optimierungsaufgaben werden in vorteilhafter Weise die Anforderungen des Marktes zur Einsatzplanung, Prozessüberwachung, Simulation und/oder Optimierung der kombinierten Stromerzeugungs- und Wasserentsalzungsanlagenanlagen abgedeckt und die Möglichkeit zur Simulation und flexiblen Definition der Optimierungsziele erreicht.

Die Zusammenführung aktuell gemessener und historischer Prozessdaten in der Informationsverwaltungsschicht ermöglicht in vorteilhafter Weise eine Ermittlung von Leistungskennwerten für die gesamte kombinierte Anlage auszuführen und erlaubt somit die Erfüllung einer weiteren wesentlichen Marktanforderung. Auch wird die Entscheidungsfindung hinsichtlich des kombinierten Anlagenbetriebs unterstützt.

Das Verfahren, mit dem die Aufgabe weiterhin gelöst wird, ist dem Anspruch 17 zu entnehmen. Dabei werden in wenigstens einem Modul zur Einsatzplanung, wenigstens einem Modul zur Prozesssimulation und wenigstens einem Modul zur Prozessoptimierung Komponenten zur Modellierung, Simulation und Optimierung der technischen Anlage hinterlegt und von einer mit den Modulen über wenigstens eine Schnittstelle zusammenwirkenden Informationsverwaltungsschicht aktuell gemessene und historische Prozessdaten für die Ermittlung von Kennwerten für die für die Module zur Einsatzplanung, Prozesssimulation und Optimierung bereitgestellt. Ist das Modul zur Prozesssimulation mit entsprechenden Optimierungsmöglichkeiten ausgestattet, wird ein weiteres Modul zur Prozessoptimierung nicht benötigt.

Die in den Modulen ermittelten, Kenn- und Betriebswerte werden, unter Berücksichtigung der hinterlegten Komponenten, der Informationsverwaltungsschicht zur weiteren Verarbeitung zugeführt.

Bei der Ausführung des erfindungsgemäßen Verfahrens zur Einsatzplanung, Prozessüberwachung, Simulation und/oder Optimierung wird zwischen zwei Ausführungsvarianten unterschieden.

In der ersten Ausführungsvariante werden sowohl die Einsatzplanung als auch die Prozesssimulation und -optimierung in den entsprechenden Modulen getrennt voneinander ausgeführt. Die in den Modulen ermittelten Kenn- und Betriebswerte weden in der Informationsverwaltungsschicht abgelegt und zur weiteren Verarbeitung gespeichert. Nur die für die für die jeweiligen Kenn- und Betriebswertermittlungen erforderlichen Eingangsinformationen, wie beispielsweise Messwerte, Konstanten, Datenreihen etc. als auch die ermittelten Ergebnisse werden zwischen der Informationsverwaltungsschicht und den Modulen ausgetauscht.

In einer weiteren Ausführungsvariante werden die ermittelten Kenn- und Betriebswerte der Einsatzplanung zur Ermittlung der Kenn- und Betriebswerte der Prozesssimulation und -optimierung sowie umgekehrt direkt genutzt. In diesem Fall agiert die Informationsverwaltungsschicht als Datentransporteur und Datenspeicher.

Das erfindungsgemäße System und Verfahren zur Einsatzplanung, Prozessüberwachung, Prozesssimulation und/oder -ptimierung in kombinierten gas-, öl- oder kohlebefeuerten Stromerzeugungs- und thermischen oder membranbasierten Wasserentsalzungsanlagenanlagen stellt eine effiziente und optimale Möglichkeit dar, den Betrieb von kombinierten Stromerzeugungs- und Wasserentsalzungsanlagen zu simulieren, zu optimieren und zu überwachen.

Das erfindungsgemäße System und Verfahren wird vorzugsweise zur Arbeitspunktoptimierung bei Degradierungen in der Stromerzeugungsanlage und/oder Wasserentsalzungsanlage oder veränderten Umgebungsbedingungen, zur Optimierung eines Wassermischungsvorgangs bei Einsatz von verschiedenen Wasserentsalzungsprozesstechnologien, zur Optimierung der Anzahl der An- und Abfahrvorgange aer Stromerzeugungs- und Wasserentsalzungsanlagen und/oder zur Optimierung der Speicherung von produziertem entsalztem Wasser verwendet.

Anhand des in den folgenden Figuren dargestellten Ausführungsbeispieles sollen die Erfindung sowie vorteilhafte Ausgestaltungen, Verbesserungen und weitere Vorteile der Erfindung näher erläutert und beschrieben werden.

Es zeigen:
- **Fig. 1**: eine Ausführungsform einer kombinierten Stromerzeugungs- und Wasserentsalzungsanlagenanlage,
- **Fig. 2**: eine Ausführungsform des erfindungsgemäßen Systems zur Einsatzplanung, Prozessüberwachung, Simulation und Optimierung einer kombinierten Stromerzeugungs- und Wasserentsalzungsanlagenanlage, und
- **Fig. 3**: einen beispielhaften automatisch ablaufenden Verfahrensablauf, welcher eine Ausführungsform des erfindungsgemäßen Systems veranschaulicht.

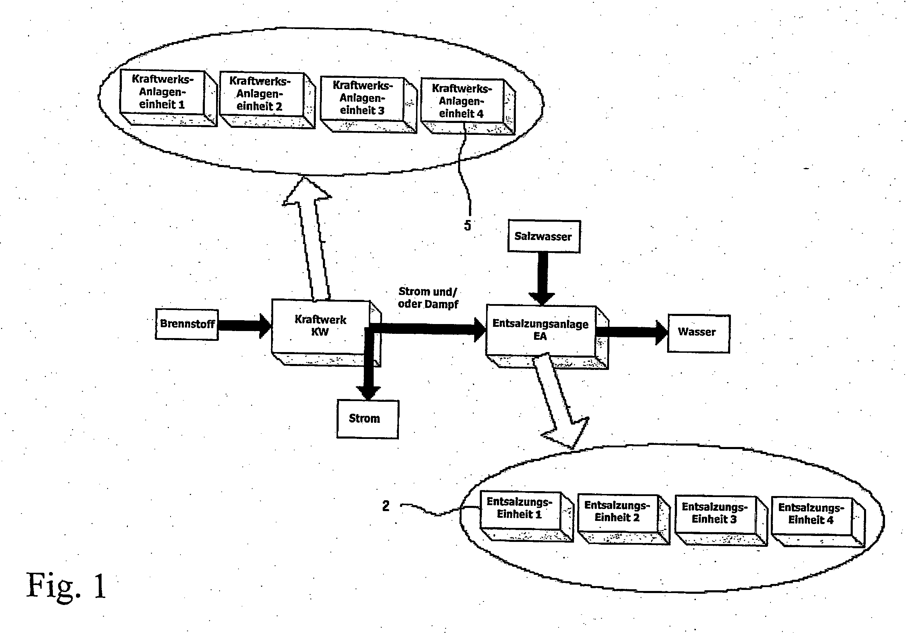

**Fig. 1** **zeigt** eine Ausführungsform einer kombinierten Stromerzeugungs- und Wasserentsalzungsanlagenanlage, bestehend aus einem Kraftwerk KW zur Strom- und/oder Dampferzeugung aus Brennstoff und einer Entsalzungsanlage EA, in welcher Meerwasser oder Brackwasser entsalzt werden.

Die Wasserentsalzungsanlage umfasst mehrere Entsalzungseinheiten 2, welche abhängig von der Anlagenstruktur, mit dem Kraftwerk oder einzelnen Kraftwerksanlageneinheiten 5 kombiniert sind. Für die thermische Wasserentsalzung wird Abdampf aus dem Kraftwerk KW bzw. den Kraftwerksblöcken 5 genutzt, um das Meerwasser oder Brackwasser zu entsalzen. Die Verbindung der Wasserentsalzungsanlage mit dem Kraftwerk 3 bietet Optimierungspotentiale hinsichtlich der Investitionskosten und der Betriebskosten. Investitionskosten werden durch Nutzung gemeinsamer Infrastruktur und Offline- Simulationen von Betriebsszenarien während der Planungsphase optimiert, während sich im Fall der Betriebskosten der Einsatz einer Online- Simulations- und Optimierungslösung für die kombinierte Anlage anbietet.

Die Simulations- und Optimierungsaufgaben für die in **Fig**. **1** dargestellte kombinierte, auch als gekoppelt bezeichnete, Stromerzeugungs- und Wasserentsalzungsanlagenanlage für die Einsatzplanung und Prozessführung umfassen beispielsweise:
- veränderte Lastanforderungen für die Stromerzeugungsanlage und/oder die Wasserentsalzungsanlage, die sich abhängig von der Tageszeit, der Woche, dem Monat oder dem Jahr ändern können,
- eine Umstellung zwischen Vollast und Teillast bei der Stromerzeugung,
- eine Erstellung neuer Fahrpläne bedingt durch einen Ausfall der Stromerzeugungsanlage und/oder Wasserentsalzungsanlage,
- eine Erstellung neuer Fahrpläne bedingt durch die Instandsetzung der Stromerzeugungsanlage und/oder Wasserentsalzungsanlage,
- eine Umstellung des Produktionsziels, beispielsweise durch Umstellung von Sommer- auf Winterbetrieb, indem beispielsweise das Produktionsziel "Strom" auf das Produktionsziel "Wasser" umgestellt wird,
- eine Erstellung von Einsatzplänen für kurzfristige Zeiträume, beispielsweise die Erstellung eines Anlageneinsatzplanes für den nächsten Tag,
- eine Erstellung von Einsatzplänen für mittelfristige Zeiträume, beispielsweise zur Neuverhandlung von Brennstoffbezügen,
- eine Erstellung von Einsatzplänen für langfristige Zeiträume bei geplanten Anlagenerweiterungen,
- Arbeitspunktoptimierungen mittels der Prozessoptimierung im Fall von Degradierungen in der Stromerzeugungsanlage und/oder Wasserentsalzungsanlage oder veränderten Umgebungsbedingungen, wie beispielsweise der Seewassertemperatur,
- eine Optimierung des Wassermischungsvorgangs bei Einsatz von verschiedenen Wasserentsalzungsprozesstechnologien,
- eine Optimierung der Anzahl der An- und Abfahrvorgänge der Stromerzeugungs- und Wasserentsalzungsanlagen, und
- eine Optimierung der Speicherung des produzierten entsalzten Wassers.

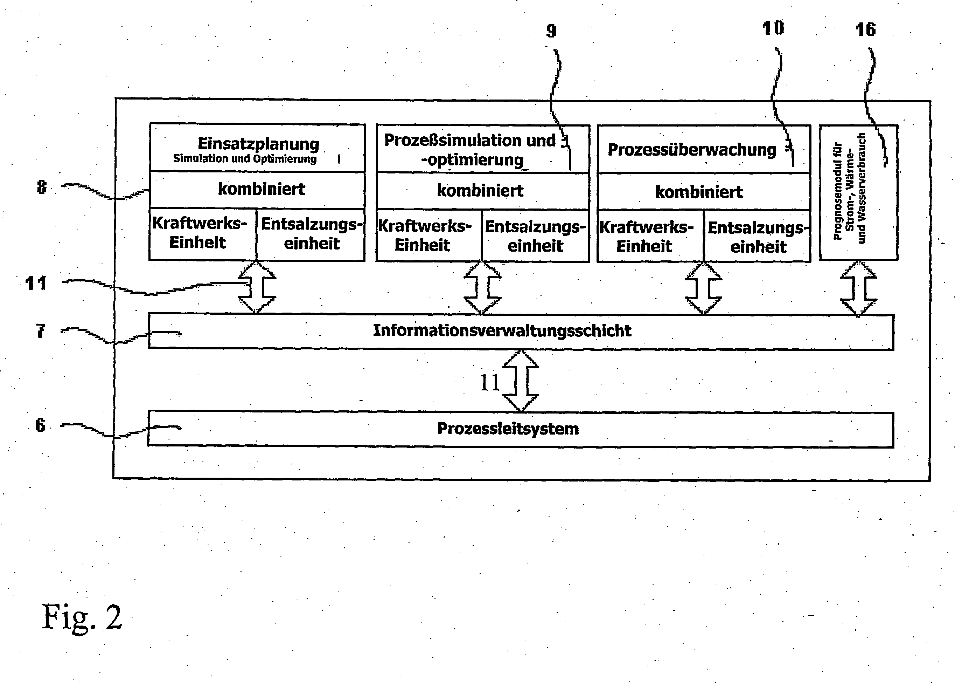

Mittels dem in **Fig. 2** dargestellten Systems zur Einsatzplanung, Prozessüberwachung, Simulation und Optimierung der kombinierten Stromerzeugungs- und Wasserentsalzungsanlagenanlage sind die Optimierungs- und Simulationsaufgaben kombiniert für die gekoppelte Stromerzeugungs- und Meerwasserentsalzungsanlage der **Fig. 1** ausführbar.

Das erfindungsgemäße System umfasst für den Bereich der Simulation/Optimierung ein Modul zur Einsatzplanung 8 sowie ein Modul zur Prozessoptimierung/Simulation 9. Die Kombination dieser Module 8, 9 erlaubt die gegebenen Anforderungen hinsichtlich Simulation und Optimierung abzudecken. Die Module zur Einsatzplanung 8 und zur Prozessoptimierung/ -Simulation 8, 9 beinhalten die entsprechenden Komponenten inklusive der notwendigen Modelle, wie beispielsweise der Prozessmodelle für die Modellierung der Anlage, die für eine kombinierte Simulation und Optimierung der gekoppelten Wasserentsalzungseinheiten 2 mit den Kraftwerksanlageneinheiten 5 erforderlich sind.

In den Modellen sind die entsprechenden Komponenten zur Modellierung, Simulation und Optimierung der technischen Anlage hinterlegt, wobei die Modelle an die jeweiligen spezifischen Anforderungen jederzeit anpassbar sind. Die Komponenten sind entsprechend den Anforderungen von Einsatzplanung, Simulation und Prozessoptimierung unterschiedlich ausgeprägt. So sind den Komponenten für die Prozesssimulation- und optimierung detaillierte mathematische Gleichungen zum Bespiel für Massen- und Energiebilanzen sowie Kostenfunktionen hinterlegt, die für die Komponenten der Einsatzplanung in dieser Ausprägung nicht benötigt werden.

Werden als Alternative zur Abwendung eines Ausfalls, d.h. zur Sicherstellung der Betriebs der Wasserentsalzungsanlage, separate Kessel zur Erzeugung des benötigten Dampfes genutzt, sind auch die entsprechenden Komponenten zur Abbildung des separaten Kessels in den Modulen 8, 9 zur Einsatzplanung, Simulation und Prozessoptimierung vorhanden.

Die miteinander in Beziehung stehenden Module 8, 9 zur Einsatzplanung, Prozesssimulation und Prozessoptimierung wirken über Schnittstellen 11 mit einer Informationsverwaltungsschicht 7 zusammen, welche vorzugsweise als System zum Management von Anlageninformationen (Plant Information Management System PIMS) ausgeführt ist.

Die Informationsverwaltungsschicht 7 stellt aktuell gemessene sowie historische Prozessdaten zur Ermittlung von Kenn- und Betriebswerten, wie Produktionskosten oder optimierte Arbeitspunkte, für die Module 8, 9 zur Einsatzplanung, Prozesssimulation und Optimierung bereit und transferiert die Prozessdaten in die Module 8, 9. Die Module 8, 9 ermitteln aus den aktuell gemessenen sowie historischen Prozessdaten, unter Berücksichtigung der in den Einheiten 2, 5 hinterlegten Komponenten, Kenn- und Betriebswerte mittels Prozessoptimierung und -Simulation für die gekoppelte Stromerzeugungs- und Meerwasserentsalzungsanlage.

Die in den Modulen 8, 9 ermittelten Kenn- und Betriebswerte werden über die Schnittstellen 11 der Informationsverwaltungsschicht 7 zur weiteren Verarbeitung zugeführt. Dazu ist die Informationsverwaltungsschicht 7 mit dem Prozess, beispielsweise mit einem Prozessleitsystem 6, verbunden. Die Anbindung der Informationsverwaltungsschicht 7 an das Prozessleitsystem 6 wird über Standardschnittstellen oder über proprietäre Schnittstellen ausgeführt.

Abhängig vom gewählten Informationssystem, das die Informationsverwaltungsschicht 7 repräsentiert, umfasst das erfindungsgemäße System unterschiedliche Funktionalitäten zur Visualisierung, Datenarchivierung, Berichtswesen, sowie zur Auswertung und Analyse der ermittelten Kenn- und Betriebswerte.

Das erfindungsgemäße System ist in vorteilhafter Weise so ausgeführt, dass ein Austausch, eine Modifizierung oder die Entfernung wenigstens eines der Module 8, 9 durchführbar ist, ohne die anderen Module und damit die Gesamtkonfiguration zu beeinflussen.

Zu den für die Simulation und Optimierung benötigten Informationen gehören neben den aktuell gemessenen und historischen Prozessdaten auch die Ergebnisse der jeweilig anderen Optimierung, d.h. dass die Prozesssimulation und-optimierung auf die aktuellen Ergebnisse der Einsatzplanung zurückgreift und umgekehrt, so dass es sich hierbei um eine integrierte Optimierung handelt.

Das erfindungsgemäße System umfasst des weiteren ein Prozessüberwachungsmodul 10, welches mit der Informationsverwaltungsschicht 7 zusammenwirkt und eine Ermittlung von charakteristischen Leistungskennwerten, wie Wirkungsgrade oder Produktionsmengen einzelner Einheiten, die zur ständigen Überwachung des Betriebs sowie zur nachfolgenden Dokumentation und Auswertung nutzbar sind, ausführt. Die Ermittlung der Leistungskennwerte erfolgt entweder in der Informationsverwaltungsschicht 7 oder in dem an die Informationsverwaltungsschicht 7 angeschlossenen Prozessüberwachungsmodul 10. Die Kennwerte, die sowohl stromerzeugungs- und entsalzungsanlagenspezifische aber auch kombinierte Kennwerte wie Produktionskosten umfassen, werden basierend auf aktuellen gemessenen Prozessdaten, die über die Informationsverwaltungsschicht 7 zur Verfügung gestellt werden, ermittelt und über die zur Verfügung stehenden Visualisierungs- und Dokumentationsfunktionen visualisiert und dokumentiert.

Das erfindungsgemäße System unterstützt eine weitere Option, welche prognostizierte Verbrauchsdaten den Modulen zur Einsatzplanung 8 und dem Modul zur Prozessoptimierung und -Simulation 9 als Basis für die Optimierungsaufgaben bereitstellt.

Das erfindungsgemäße System umfasst dazu ein Prognosemodul 16, welches entsprechende Prognosen für Strom-, Wärme- und Wasserverbrauch erstellt. Das Prognosemodul 16 bezieht einen Teil der dazu benötigten Daten über den aktuellen Verbrauch und Zustand der Anlage sowie historische Daten von der Informationsverwaltungsschicht 7. Ein weiterer Teil der Informationen wird von anderen Systemen, wie beispielsweise einem System zur Wetterprognose, zur Verfügung gestellt. Nach der Ausführung der Prognose werden die ermittelten Daten in die Informationsverwaltungsschicht 7 zurückgeschrieben und stehen somit den Optimierungsmodulen über die bereits angeführten Schnittstellen 11 zur Verfügung.

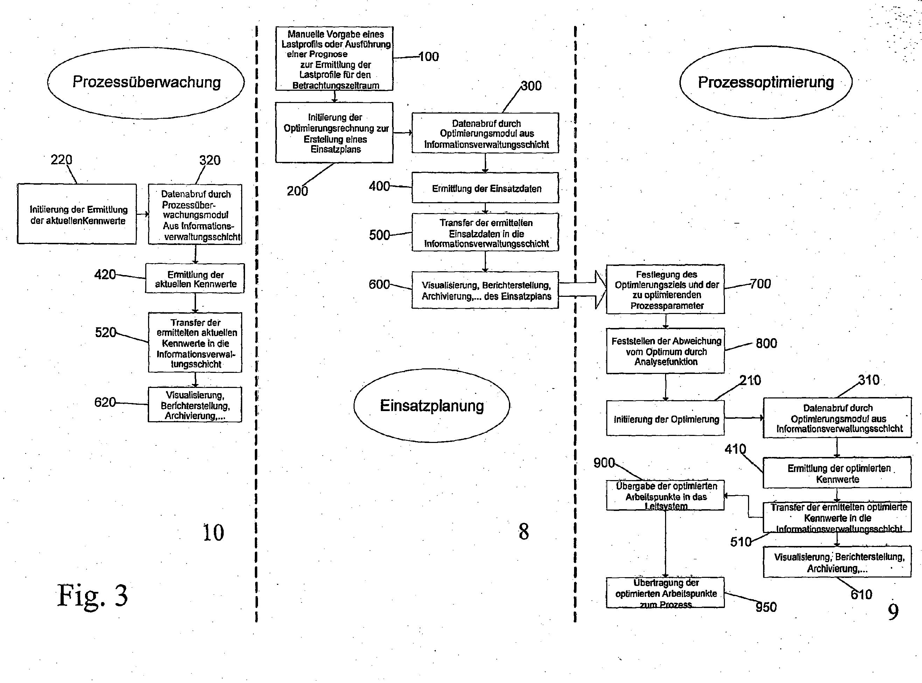

Fig. 3 zeigt einen beispieihaften automatischen Verfahrensablauf, welcher eine Ausführungsform des erfindungsgemäßen Systems veranschaulicht.

Dem Modul zur Einsatzplanung 8, welches Komponenten zur Modellierung, Simulation und Optimierung der kombinierten Stromerzeugungs- und Wasserentsalzungsanlage umfasst, wird in einem ersten Schritt 100 ein Lastprofil als Basis für die zu lösenden Optimierungsaufgaben bereitgestellt. Das Lastprofil kann vorgegeben oder mittels Verwendung eines Prognosemoduls 16 ermittelt werden. Bei der Ermittlung des Lastprofils werden unter anderem historische Verbrauchsdaten und Wetterdaten verwendet.

In einem zweiten Schritt 200 wird der Optimierungsprozess zur Erstellung eines Einsatzplanes initiiert.

In einem dritten Schritt 300 werden die aktuell gemessenen und/oder historischen Prozessdaten aus der Informationsverwaltungsschicht 7 abgerufen und in einem vierten Schritt 400 werden unter Berücksichtigung der hinterlegten Komponenten die Einsatzdaten für den Einsatzplan ermittelt.

Die ermittelten Einsatzdaten werden in einem fünften Schritt 500 in die Informationsverwaltungsschicht 7 transferiert und stehen somit als Einsatzplan der Prozessoptimierung zur Verfügung. Weiterhin kann der Einsatzplan in einem Schritt 600 mittels eines Visualisierungs- und Dokumentationsmoduls visualisiert, archiviert und dokumentiert werden.

Nachdem in einem siebten Schritt 700 aus dem Einsatzplan das Optimierungsziel und die zu optimierenden Prozessparameter festgelegt wurden, wird in einem achten Schritt 800 mittels einer Analyse durch einen Soll-/Ist-Vergleich der ermittelten Kenn- und Betriebswerte die Abweichung vom Optimum ermittelt und in einem neunten Schritt 210 mittels dem Modul zur Prozessoptimierung 9 die Optimierung des Prozesses initiiert. Zur Feststellung der Abweichung vom Optimum werden hierbei die in der Prozessüberwachung mittels des Prozessüberwachungsmoduls 10 ermittelten Kennwerte genutzt, welche in Fig. 3 links dargestellt ist.

Die Prozessüberwachung läuft parallel zur Einsatzplanung 8 und zur Prozessoptimierung 9, wobei die Prozessüberwachung automatisch oder manuell in einem zehnten Schritt 220 initiiert wird. In einem elften Schritt 320 ruft das Prozessüberwachungsmodul 10 die benötigten aktuell gemessenen und historischen Prozessdaten aus der Informationsverwaltungsschicht ab, ermittelt in einem zwölften Schritt 420 die aktuellen Kennwerte und schreibt in einem dreizehnten Schritt 520 die ermittelten Kennwerte zurück in die Informationsverwaltungsschicht 7. Die Informationsverwaltungsschicht 7 stellt die ermittelten Kennwerte für die Analyse bereit. Zusätzlich stehen die Kennwerte auch zur Visualisierung, Archivierung, Dokumentation sowie zur Überwachung mittels des Visualisierungs- und Dokumentationsmoduls 620 zur Verfügung.

Zur Ermittlung der optimierten Kenn- und Betriebswerte für die Optimierung des Prozesses ruft das Modul zur Prozessoptimierung 9 in einem weiteren Schritt 310 die aktuell gemessenen und/oder historischen Prozessdaten und/oder ermittelten Kennwerte aus dem Prozessüberwachungsmoduls 10, welche für die Optimierung der Anlage benötigt werden, aus der Informationsverwaltungsschicht 7 ab . In einem folgenden Schritt 410 werden die Kenn- und Betriebswerte für die Optimierung des Prozesses der Anlage ermittelt, welche in einem nachfolgenden Schritt 510 wiederum in die Informationsverwaltungsschicht 7 übertragen werden und als optimierte Arbeitspunkte über das Leitsystem der Anlage 900 dem Prozess 950 zur Verfügung gestellt werden.

Die Übertragung der optimierten Arbeitspunkte zum Prozess wird automatisch ausgeführt. Alternativ ist die Übertragung der optimierten Arbeitspunkte zum Prozess auch manuell ausführbar. Im Fall der automatischen Übertragung werden die optimierten Arbeitspunkte direkt übertragen, ohne dass der Bediener der Anlage eingreifen muss. Im Fall der manuellen Übertragung werden die optimierten Arbeitspunkte erst dann an den Prozess 950 übertragen, wenn der Bediener den Vorgang der Übertragung bestätigt hat.

Weiterhin werden die ermittelten optimierten Kenn- und Betriebswerte des Prozesses mittels einer von der Informationsverwaltungsschicht 7 zur Verfügung gestellten Visualisierungs-, Archivierungs- und Dokumentationsfunktionalität in einem letzten Schritt 610 visualisiert, archiviert und dokumentiert.

Durch die erfindungsgemäße Ausführung der Prozessoptimierung werden unter anderen die Wirkungsgrade der Anlagen bzw. Anlagenkomponenten optimiert. Dieses wirkt zurück auf die Einsatzoptimierung, da beispielsweise ein Anlagenteil nun mit einem besseren Wirkungsgrad gefahren wird als es ursprünglich geplant war.

## Patentansprüche

1. System zur Einsatzplanung, Prozessüberwachung, Simulation und/oder Optimierung einer kombinierten Stromerzeugungs- und Wasserentsalzungsanlage, welche mehrere miteinander kombinierbare Entsalzungeinheiten (2) und Kraftwerksanlageneinheiten (5) umfasst,
- mit wenigstens einem Modul zur Prozesssimulation (9), und wenigstens einem Modul zur Prozessoptimierung (9), wobei in den Modulen (9) Komponenten zur Modellierung, Simulation und Optimierung der Anlage hinterlegt sind,
- die miteinander in Beziehung stehenden Module (9) über wenigstens eine Schnittstelle (11) mit einer Informationsverwaltungsschicht (7) zusammenwirken, welche aktuell gemessene und/oder historische Prozessdaten für die Ermittlung von Kenn- und/oder Betriebswerten für die Module (9) zur Prozesssimulation und Prozessoptimierung bereitstellt,
- die in den Modulen (9) aus den aktuell gemessenen und/oder historischen Prozessdaten ermittelten Kenn- und/oder Betriebswerte sowohl stromerzeugungs- und entsalzungsanlagenspezifische Kennwerte als auch eine Kombination aus diesen Kennwerten umfassen, und
- die in den Modulen (9) aus den aktuell gemessenen und/oder historischen Prozessdaten ermittelten Kenn- und/oder Betriebswerte, unter Berücksichtigung der hinterlegten Komponenten, der Informationsverwaltungsschicht (7) zur weiteren Verarbeitung zuführbar sind,
**dadurch gekennzeichnet, dass**
- das System neben den Modulen (9) zur Prozesssimulation und Prozessoptimierung wenigstens ein Modul zur Einsatzplanung (8) umfasst, welches ebenfalls mit der Informationsverwaltungsschicht (7) zusammenwirkt und welches optimierte Fahrpläne für die Einheiten (2, 5) und/oder die gesamte Anlage ermittelt,
- die Module (9) zur Prozesssimulation und Prozessoptimierung auf aktuelle Ergebnisse des Moduls zur Einsatzplanung (8) zurückgreifen und umgekehrt,
- in der Anlage zwei oder mehrere verschiedene Prozesstechnologien für Wasserentsalzung zum Einsatz kommen, wobei mit den verschiedenen Prozesstechnologien unterschiedliche Wasserqualitäten und Wasserquantitäten erzeugt werden, und
- das Modul zur Einsatzplanung (8) zur Optimierung eines Wassermischungsvorgangs eine Wassermischungskomponente berücksichtigt, um die Einheiten (2, 5) der Stromerzeugungs- und Wasserentsalzungsanlage entsprechend vorgegebener Grenzen hinsichtlich der Wasserqualität zu fahren und somit ein Wasser zu produzieren, dessen Qualität innerhalb der definierten Grenzen liegt.

2. System nach Anspruch 1, **dadurch gekennzeichnet, dass** das Modul zur Prozesssimulation/Prozessoptimierung (9) optimale Arbeitspunktvorgaben für charakteristische Betriebswerte der Einheiten (2, 5) und/oder der gesamten Anlage ermitteln.

3. System nach einem der vorherigen Ansprüche, **dadurch gekennzeichnet, dass** in den Modulen zur Einsatzplanung (8), zur Prozessoptimierung und zur Prozesssimulation (9) Bibliotheken mit Komponenten zur Abbildung verschiedener Anlagenkonfigurationen abgelegt sind.

4. System nach Anspruch 3, **dadurch gekennzeichnet, dass** die Bibliotheken der Module zur Einsatzplanung (8), Prozesssimulation und zur Prozessoptimierung (9) beliebig erweiterbar und/oder modifizierbar sind.

5. System nach einem der vorherigen Ansprüche, **dadurch gekennzeichnet, dass** die Informationsverwaltungsschicht (7) mit einem Prozessüberwachungsmodul (10) zur Ermittlung von Leistungskennwerten während des Betriebes der technischen Anlage zusammenwirkt.

6. System nach einem der vorherigen Ansprüche, **dadurch gekennzeichnet, dass** die Informationsverwaltungsschicht (7) mit einem Prognosemodul (16) zur Vorhersage von Prozessdaten zusammenwirkt.

7. System nach einem der vorherigen Ansprüche, **dadurch gekennzeichnet, dass** die Module (8, 9, 10, 16) über Standardschnittstellen oder proprietäre Schnittstellen mit der Informationsverwaltungsschicht (7) verbunden sind.

8. System nach einem der vorherigen Ansprüche, **dadurch gekennzeichnet, dass** die Informationsverwaltungsschicht (7) und/oder die an die Informationsverwaltungsschicht (7) angeschlossenen Module (8, 9, 10, 16) die Kenn- und/oder Betriebswerte für die Einsatzplanung, Optimierung, Simulation und Prozessüberwachung der technischen Anlage ermitteln.

9. System nach einem der vorherigen Ansprüche, **dadurch gekennzeichnet, dass** die in den Modulen (8, 9, 10, 16) ermittelten Kenn- und/oder Betriebswerte die jeweiligen Einheiten und/oder miteinander kombinierte Einheiten (2, 5) charakterisieren.

10. System nach einem der vorherigen Ansprüche, **dadurch gekennzeichnet, dass** die Ermittlung der Kenn- und/oder Betriebswerte ereignisbedingt, zyklisch und/oder manuell ausführbar ist.

11. System nach einem der vorherigen Ansprüche, **dadurch gekennzeichnet, dass** die ermittelten Kenn- und/oder Betriebswerte veränderte Lastanforderungen für die Einheiten (2, 5) der technischen Anlage, den Ausfall und/oder die Instandsetzung von Einheiten (2, 5) der technischen Anlage, und/oder Umstellungen eines Produktionsziels berücksichtigen.

12. System nach einem der vorherigen Ansprüche, **dadurch gekennzeichnet, dass** die Informationsverwaltungsschicht (7) aktuell gemessene und/oder historischen Prozessdaten für die Ermittlung der Leistungskennwerte bereitstellt.

13. System nach einem der vorherigen Ansprüche, **dadurch gekennzeichnet, dass** die Informationsverwaltungsschicht (7) die aktuellen gemessenen und/oder historischen Prozessdaten zur Ermittlung der Kenn- und/oder Betriebswerte in die Module (8, 9, 10, 16) transferiert und die in den Modulen (8, 9, 10, 16) ermittelten Kenn- und/oder Betriebswerte der Informationsverwaltungsschicht (7) zur weiteren Verarbeitung zuführbar sind.

14. System nach einem der vorherigen Ansprüche, **dadurch gekennzeichnet, dass** die ermittelten Kenn- und/oder Betriebswerte mittels wenigstens eines Anzeigemoduls visualisierbar, archivierbar und/oder dokumentierbar sind.

15. System nach einem der vorherigen Ansprüche, **dadurch gekennzeichnet, dass** die Informationsverwaltungsschicht (7) oder das Prozessüberwachungsmodul (10) zur Analyse der Kenn- und/oder Betriebswerte vorgesehen ist.

16. Verfahren zur Einsatzplanung, Prozessüberwachung, Simulation und/oder Optimierung einer kombinierten Stromerzeugungs- und Wasserentsalzungsanlage, welche mehrere miteinander kombinierbare Entsalzungseinheiten (2) und Kraftwerksanlageneinheiten (5) umfasst, wobei
- in wenigstens wenigstens einem Modul zur Prozesssimulation (9) und wenigstens einem Modul zur Prozessoptimierung (9) Komponenten zur Modellierung, Simulation und Optimierung der Anlage hinterlegt werden,
- von einer mit den Modulen (9) über wenigstens eine Schnittstelle (11) zusammenwirkenden Informationsverwaltungsschicht (7) aktuell gemessene und/oder historische Prozessdaten für die Ermittlung von Kenn- und/oder Betriebswerten für die Module (9) zur Prozesssimulation und Prozessoptimierung bereitgestellt werden,
- die in den Modulen (9) aus den aktuell gemessenen und/oder historischen Prozessdaten ermittelten Kenn- und/oder Betriebswerte sowohl stromerzeugungs- und entsalzungsanlagenspezifische Kennwerte als auch eine Kombination aus diesen Kennwerten umfassen,
- und die in den Modulen (9) aus den aktuell gemessenen und/oder historischen Prozessdaten ermittelten Kenn- und/oder Betriebswerte, unter Berücksichtigung der hinterlegten Komponenten, der Informationsverwaltungsschicht (7) zur weiteren Verarbeitung zugeführt werden,
**dadurch gekennzeichnet, dass**
- mittels einem ebenfalls mit der Informationsverwaltungsschicht zusammenwirkenden Modul zur Einsatzplanung (8) optimierte Fahrpläne für die Einheiten (2, 5) und/oder die gesamte Anlage ermittelt werden,
- von den Modulen (9) zur Prozesssimulation und Prozessoptimierung auf aktuelle Ergebnisse des Moduls zur Einsatzplanung (8) zurückgegriffen wird und umgekehrt,
- in der Anlage zwei oder mehrere verschiedene Prozesstechnologien für Wasserentsalzung zum Einsatz kommen, wobei mit den verschiedenen Prozesstechnologien unterschiedliche Wasserqualitäten und Wasserquantitäten erzeugt werden, und
- in dem Modul zur Einsatzplanung (8) zur Optimierung eines Wassermischungsvorgangs eine Wassermischungskomponente berücksichtigt wird, um die Einheiten (2, 5) der Stromerzeugungs- und Wasserentsalzungsanlage entsprechend vorgegebener Grenzen hinsichtlich der Wasserqualität zu fahren und somit ein Wasser zu produzieren, dessen Qualität innerhalb der definierten Grenzen liegt.

17. Verfahren nach Anspruch 16, **dadurch gekennzeichnet, dass** mittels der Module zur Prozesssimulation und Prozessoptimierung (9) optimale Arbeitspunktvorgaben für charakteristische Betriebswerte der Einheiten (2, 5) und/oder der gesamten technischen Anlage ermittelt werden.

18. Verfahren nach einem der Ansprüche 16 bis 17, **dadurch gekennzeichnet, dass** in den Modulen zur Einsatzplanung (8), zur Prozessoptimierung und zur Prozesssimulation (9) Bibliotheken mit Komponenten für verschiedene Anlagenkonfigurationen abgelegt werden.

19. Verfahren nach Anspruch 18, **dadurch gekennzeichnet, dass** die Bibliotheken der Module zur Einsatzplanung (8) Prozesssimulation und zur Prozessoptimierung (9) beliebig erweitert und/oder modifiziert werden.

20. Verfahren nach einem der Ansprüche 16 bis 19, **dadurch gekennzeichnet, dass** eine Ermittlung von Leistungskennwerten während des Betriebes der technischen Anlage mittels eines mit der Informationsverwaltungsschicht (7) zusammenwirkenden Prozessüberwachungsmoduls (10) ausgeführt wird.

21. Verfahren nach einem der Ansprüche 16 bis 20, **dadurch gekennzeichnet, dass** eine Vorhersage von Prozessdaten mittels eines mit der Informationsverwaltungsschicht (7) zusammenwirkenden Prognosemoduls (16) ausgeführt wird.

22. Verfahren nach einem der Ansprüche 16 bis 21, **dadurch gekennzeichnet**, die Module (8, 9, 10, 16) über Standardschnittstellen oder proprietäre Schnittstellen mit der Informationsverwaltungsschicht (7) verbunden werden.

23. Verfahren nach einem der Ansprüche 16 bis 22, **dadurch gekennzeichnet, dass** mittels der Informationsverwaltungsschicht (7) und/oder der an die Informationsverwaltungsschicht (7) angeschlossenen Module (8, 9, 10, 16) die Kenn- und/oder Betriebswerte für die Einsatzplanung, Optimierung, Simulation und Prozessüberwachung der technischen Anlage ermittelt werden.

24. Verfahren nach einem der Ansprüche 16 bis 23, **dadurch gekennzeichnet, dass** mit den in den Modulen (8, 9, 10, 16) ermittelten Kenn- und/oder Betriebswerte die jeweiligen Einheiten und/oder miteinander kombinierte Einheiten (2, 5) charakterisiert werden.

25. Verfahren nach einem der Ansprüche 16 bis 24, **dadurch gekennzeichnet, dass** die Ermittlung der Kenn- und/oder Betriebswerte ereignisbedingt, zyklisch und/oder manuell aktiviert wird.

26. Verfahren nach einem der Ansprüche 16 bis 25, **dadurch gekennzeichnet, dass** mit den ermittelten Kenn- und/oder Betriebswerten veränderte Lastanforderungen für die Einheiten (2, 5) der technischen Anlage, der Ausfall und/oder die Instandsetzung von Einheiten (2, 5) der technischen Anlage und/oder Umstellungen eines Produktionsziels und/oder neu erstellte Einsatzpläne berücksichtigt werden.

27. Verfahren nach einem der Ansprüche 16 bis 26, **dadurch gekennzeichnet, dass** mittels der Informationsverwaltungsschicht (7) aktuell gemessene und/oder historische Prozessdaten für die Ermittlung der Leistungskennwerte bereitstellt werden.

28. Verfahren nach einem der Ansprüche 16 bis 27, **dadurch gekennzeichnet, dass** mittels der Informationsverwaltungsschicht (7) die aktuell gemessenen und historischen Prozessdaten zur Ermittlung der Kenn- und/oder Betriebswerte in die Module (8, 9, 10, 16) transferiert werden und die in den Modulen (8, 9, 10, 16) ermittelten Kenn- und/oder Betriebswerte der Informationsverwaltungsschicht (7) zur weiteren Verarbeitung zugeführt werden.

29. Verfahren nach einem der Ansprüche 16 bis 28, **dadurch gekennzeichnet, dass** die ermittelten Kenn- und/oder Betriebswerte mittels wenigstens eines Anzeigemoduls visualisiert, archiviert und/oder dokumentiert werden.

30. Verfahren nach einem der Ansprüche 16 bis 29, **dadurch gekennzeichnet, dass** die Kenn- und/oder Betriebswerte mittels der Informationsverwaltungsschicht (7) oder des Prozessüberwachungsmoduls (10) analysiert werden.

31. Verwendung des Systems nach einem der Ansprüche 1 bis 15 zur Arbeitspunktoptimierung bei Degradierungen in der Stromerzeugungsanlage und/oder Wasserentsalzungsanlage oder veränderten Umgebungsbedingungen, zur Optimierung der Anzahl der An- und Abfahrvorgänge der Stromerzeugungs- und Wasserentsalzungsanlagen und/oder zur Optimierung der Speicherung von produziertem entsalzten Wasser.

## Claims

1. System for planning the operation of, monitoring processes in, simulating, and/or optimizing a combined power generation and water desalination plant which comprises a plurality of desalination units (2) and power plant units (5) that can be combined with each other,
- having at least one process simulation module (9) and at least one process optimization module (9), where components for modelling, simulating and optimizing the installation are stored in the modules (9),
- the interlinked modules (9) interact via at least one interface (11) with a data management layer (7), which provides the process simulation and process optimization modules (9) with real-time and/or historical process data for calculating parameters and/or operating values,
- the parameters and/or operating values calculated from the real-time and/or historical process data in the modules (9) comprise both parameters specific to the power generation and desalination plant and a combination of these parameters, and
- the parameters and/or operating values calculated from the real-time and/or histonical process data in the modules (9), taking into account the stored components, can be supplied to the data management layer (7) for further processing,
**characterized in that**
- in addition to the process simulation and process optimization modules (9), the system comprises at least one operation planning module (8) which likewise interacts with the data management layer (7) and calculates optimized operating schedules for the units (2, 5) and/or the whole installation,
- the process simulation and process optimization modules (9) resort to current results from the operation planning module (8) and vice versa,
- two or more different water desalination process technologies are used in the installation, where different water qualities and water quantities are produced with the different process technologies, and
- in order to optimize a water mixing process, the operation planning module (8) takes into account a water mixing component in order to run the units (2, 5) of the power generation and water desalination plant in accordance with predefined limits with regard to the water quality and thus to produce water whose quality is within the defined limits.

2. System according to Claim 1, **characterized in that** the process simulation/process optimization module (9) calculates optimum operating-point settings for characteristic operating values of the units (2, 5) and/or the whole installation.

3. System according to either of the previous claims, **characterized in that** libraries containing components for modelling different installation configurations are stored in the operation planning module (8) and process optimization and process simulation modules (9).

4. System according to Claim 3, **characterized in that** any additions and/or changes can be made to the libraries of the operation planning module (8) and process optimization and process simulation modules (9).

5. System according to any of the previous claims, **characterized in that** the data management layer (7) interacts with a process monitoring module (10) for calculating performance parameters during operation of the technical installation.

6. System according to any of the previous claims, **characterized in that** the data management layer (7) interacts with a forecasting module (16) for predicting process data.

7. System according to any of the previous claims, **characterized in that** the modules (8, 9, 10, 16) are connected to the data management layer (7) via standard interfaces or proprietary interfaces.

8. System according to any of the previous claims, **characterized in that** the data management layer (7) and/or the modules (8, 9, 10, 16) connected to the data management layer (7) calculate the parameters and/or operating values for operation planning, optimization, simulation and process monitoring of the technical installation.

9. System according to any of the previous claims, **characterized in that** the parameters and/or operating values calculated in the modules (8, 9, 10, 16) characterize the respective units and/or combinations of the units (2, 5).

10. System according to any of the previous claims, **characterized in that** the parameters and/or operating values can be calculated on an event-driven, periodic and/or manual basis.

11. System according to any of the previous claims, **characterized in that** the calculated parameters and/or operating values take into account changed load requirements for the units (2, 5) of the technical installation, the failure and/or repair of units (2, 5) of the technical installation, and/or changes in a production target.

12. System according to any of the previous claims, **characterized in that** the data management layer (7) provides real-time and/or historical process data for calculating the performance parameters.

13. System according to any of the previous claims, **characterized in that** the data management layer (7) transfers the real-time and/or historical process data for calculating the parameters and/or operating values into the modules (8, 9, 10, 16), and the parameters and/or operating values calculated in the modules (8, 9, 10, 16) can be supplied to the data management layer (7) for further processing.

14. System according to any of the previous claims, **characterized in that** the calculated parameters and/or operating values can be visualized, archived and/or documented by at least one display module.

15. System according to any of the previous claims, **characterized in that** the data management layer (7) or the process monitoring module (10) is provided for analyzing the parameters and/or operating values.

16. Method for planning the operation of, monitoring processes in, simulating, and/or optimizing a combined power generation and water desalination plant which comprises a plurality of desalination units (2) and power plant units (5) that can be combined with each other, where
- components for modelling, simulating and optimizing the installation are stored in at least one process simulation module (9) and at least one process optimization module (9),
- real-time and/or historical process data for calculating parameters and/or operating values for the process simulation and process optimization modules (9) is provided by a data management layer (7) interacting with the modules (9) via at least one interface (11),
- the parameters and/or operating values calculated from the real-time and/or historical process data in the modules (9) comprise both parameters specific to the power generation and desalination plant and a combination of these parameters,
- and the parameters and/or operating values calculated from the real-time and/or historical process data in the modules (9), taking into account the stored components, are supplied to the data management layer (7) for further processing,
**characterized in that**
- optimized operating schedules are calculated for the units (2, 5) and/or the whole installation using an operation planning module (8) which likewise interacts with the data management layer,
- the process simulation and process optimization modules (9) resort to current results from the operation planning module (8) and vice versa,
- two or more different water desalination process technologies are used in the installation, where different water qualities and water quantities are produced with the different process technologies, and
- in order to optimize a water mixing process, a water mixing component is taken into account in the operation planning module (8) in order to run the units (2, 5) of the power generation and water desalination plant in accordance with predefined limits with regard to the water quality and thus to produce water whose quality is within the defined limits.

17. Method according to Claim 16, **characterized in that** optimum operating point settings for characteristic operating values of the units (2, 5) and/or the whole technical installation are calculated by the process simulation and process optimization modules (9).

18. Method according to either of Claims 16 and 17, **characterized in that** libraries containing components for different installation configurations are stored in the operation planning module (8) and process optimization and process simulation modules (9).

19. Method according to Claim 18, **characterized in that** any additions and/or changes can be made to the libraries of the operation planning module (8) and process optimization and process simulation modules (9).

20. Method according to any of Claims 16 to 19, **characterized in that** performance parameters are calculated during operation of the technical installation by a process monitoring module (10) interacting with the data management layer (7).

21. Method according to any of Claims 16 to 20, **characterized in that** process data is predicted by a forecasting module (16) interacting with the data management layer (7).

22. Method according to any of Claims 16 to 21, **characterized in that** the modules (8, 9, 10, 16) are connected to the data management layer (7) via standard interfaces or proprietary interfaces.

23. Method according to any of Claims 16 to 22, **characterized in that** the parameters and/or operating values for operation planning, optimization, simulation and process monitoring of the technical installation are calculated by the data management layer (7) and/or the modules (8, 9, 10, 16) connected to the data management layer (7).

24. Method according to any claims 16 to 23, **characterized in that** the respective units and/or combinations of the units (2, 5) are **characterized by** the parameters and/or operating values calculated in the modules (8, 9, 10, 16).

25. Method according to any of Claims 16 to 24, **characterized in that** calculation of the parameters and/or operating values is activated on an event-driven, periodic and/or manual basis.

26. Method according to any of Claims 16 to 25, **characterized in that** changed load requirements for the units (2, 5) of the technical installation, the failure and/or repair of units (2, 5) of the technical installation, and/or changes in a production target and/or newly written operation plans are taken into account by the calculated parameters and/or operating values.

27. Method according to any of Claims 16 to 26, **characterized in that** real-time and/or historical process data for calculating the performance parameters are provided by the data management layer (7).

28. Method according to any of Claims 16 to 27, **characterized in that** the real-time and historical process data for calculating the parameters and/or operating values are transferred into the modules (8, 9, 10, 16) by the data management layer (7), and the parameters and/or operating values calculated in the modules (8, 9, 10, 16) are supplied to the data management layer (7) for further processing.

29. Method according to any of Claims 16 to 28, **characterized in that** the calculated parameters and/or operating values are visualized, archived and/or documented by at least one display module.

30. Method according to any of Claims 16 to 29, **characterized in that** the parameters and/or operating values are analysed by the data management layer (7) or the process monitoring module (10).

31. Use of the system according to any of Claims 1 to 15 for operating-point optimization in the event of deteriorations in the power generation plant and/or water desalination plant or changed ambient conditions, for optimizing the number of start-up and shutdown operations of the power generation and water desalination plants, and/or for optimizing the storage of desalinated water produced.

## Revendications

1. Système de planification de déploiement, de surveillance de processus, de simulation et/ou d'optimisation d'une installation combinée de production de courant et/ou de dessalement d'eau, comprenant une pluralité d'unités de dessalement (2) et de centrales électriques (5) pouvant être combinées,
- comportant au moins un module de simulation de processus (9) et au moins un module d'optimisation de processus (9), des composantes de modélisation, de simulation et d'optimisation de l'installation étant stockées dans les modules (9),
- les modules interdépendants (9) coopèrent par le biais d'au moins une interface (11) comportant une couche de gestion d'informations (7) qui fournit des données de processus de mesure actuelle et/ou historiques pour la détermination de valeurs caractéristiques et/ou de fonctionnement pour les modules (9) de simulation de processus et d'optimisation de processus,
- les valeurs caractéristiques et/ou de fonctionnement déterminées dans les modules (9) à partir des données de processus de mesure actuelle et/ou historiques comprennent des valeurs caractéristiques spécifiques des installations de production de courant et des installations de dessalement ou une combinaison de ces valeurs caractéristiques, et
- les valeurs caractéristiques et/ou de fonctionnement déterminées dans les modules (9) à partir des données de processus de mesure actuelle et/ou historiques peuvent être délivrées à la couche de gestion d'informations (7) en tenant compte des composantes stockées en vue d'un traitement supplémentaire, **caractérisé en ce que**
- le système, outre les modules (9) de simulation de processus et d'optimisation de processus, comprend au moins un module de planification de déploiement (8) qui coopère également avec la couche de gestion d'informations (7) et qui détermine des horaires optimisés pour les unités (2, 5) et/ou l'ensemble de l'installation,
- les modules (9) de simulation de processus et d'optimisation de processus utilisent des résultats actuels du module de planification de déploiement (8) et inversement,
- deux ou plusieurs technologies de traitement différentes pour le dessalement de l'eau sont utilisées dans l'installation, des qualités d'eau et des quantités d'eau différentes étant produites au moyen des différentes technologies de traitement, et
- le module de planification de déploiement (8) prend en compte une composante de mélange de l'eau pour l'optimisation d'un processus de mélange de l'eau afin que les unités (2, 5) respectent des limites prédéterminées de qualité d'eau correspondant à l'installation de production de courant et de dessalement de l'eau et qu'elles produisent ainsi une eau dont la qualité se situe entre les limites définies.

2. Système selon la revendication 1, **caractérisé en ce que** le module de simulation de processus/optimisation de processus (9) détermine des spécifications de point de fonctionnement optimales pour des valeurs de fonctionnement caractéristiques des unités (2, 5) et/ou de l'ensemble de l'installation.

3. Système selon l'une quelconque des revendications précédentes, **caractérisé en ce que** des bibliothèques comportant des composantes de modélisation de différentes configurations d'installations sont stockées dans les modules de planification de déploiement (8), d'optimisation de processus et de simulation de processus (9).

4. Système selon la revendication 3, **caractérisé en ce que** les bibliothèques des modules de planification de déploiement (8), de simulation de processus et d'optimisation de processus (9) peuvent facultativement être étendues et/ou modifiées.

5. Système selon l'une quelconque des revendications précédentes, **caractérisé en ce que** la couche de gestion d'informations (7) coopère avec un module de surveillance de processus (10) destiné à déterminer des valeurs caractéristiques de puissance pendant le fonctionnement de l'installation technique.

6. Système selon l'une quelconque des revendications précédentes, **caractérisé en ce que** la couche de gestion d'informations (7) coopère avec un module de prédiction (16) destiné à prédire des données de processus.

7. Système selon l'une quelconque des revendications précédentes, **caractérisé en ce que** les modules (8, 9, 10, 16) sont connectés par l'intermédiaire d'interfaces normalisées ou d'interfaces propriétaires à la couche de gestion d'informations (7).

8. Système selon l'une quelconque des revendications précédentes, **caractérisé en ce que** la couche de gestion d'informations (7) et/ou les modules (8, 9, 10, 16) reliés à la couche de gestion d'informations (7) déterminent les valeurs caractéristiques et/ou de fonctionnement pour la planification de déploiement, l'optimisation, la simulation et la surveillance de processus de l'installation technique.

9. Système selon l'une quelconque des revendications précédentes, **caractérisé en ce que** les valeurs caractéristiques et/ou de fonctionnement déterminées dans les modules (8, 9, 10, 16) caractérisent les unités respectives et/ou des unités (2, 5) combinées les unes aux autres.

10. Système selon l'une quelconque des revendications précédentes, **caractérisé en ce que** la détermination des valeurs caractéristiques et/ou de fonctionnement peut être effectuée en fonction d'événements, de manière cyclique et/ou manuellement.

11. Système selon l'une quelconque des revendications précédentes, **caractérisé en ce que** les valeurs caractéristiques et/ou de fonctionnement déterminées tiennent compte d'exigences de charge modifiées pour les unités (2, 5) de l'installation technique, de la panne et/ou de la remise en état d'unités (2, 5) de l'installation technique et/ou d'une reconversion d'un but de production.

12. Système selon l'une quelconque des revendications précédentes, **caractérisé en ce que** la couche de gestion d'informations (7) fournit des données de processus de mesure actuelle et/ou historiques pour la détermination de la valeur caractéristique de puissance.

13. Système selon l'une quelconque des revendications précédentes, **caractérisé en ce que** la couche de gestion d'informations (7) transfère les données de processus de mesure actuelle et/ou historiques pour déterminer les valeurs caractéristiques et/ou de fonctionnement dans les modules (8, 9, 10, 16) et **en ce que** les valeurs caractéristiques et/ou de fonctionnement déterminées dans les modules (8, 9, 10, 16) peuvent être délivrées à la couche de gestion d'informations (7) en vue d'un traitement supplémentaire.

14. Système selon l'une quelconque des revendications précédentes, **caractérisé en ce que** les valeurs caractéristiques et/ou de fonctionnement déterminées peuvent être visualisées au moyen d'au moins un module d'affichage, peuvent être archivées et/ou peuvent être documentées.

15. Système selon l'une quelconque des revendications précédentes, **caractérisé en ce que** la couche de gestion d'informations (7) ou le module de surveillance de processus (10) est prévu pour l'analyse des valeurs caractéristiques et/ou de fonctionnement.

16. Procédé de planification de déploiement, de surveillance de processus, de simulation et/ou d'optimisation d'une installation combinée de production de courant et de dessalement de l'eau, comprenant une pluralité d'unités de dessalement (2) et de centrales électriques (5) pouvant être combinées, dans lequel
- des composantes de modélisation, de simulation et d'optimisation de l'installation sont stockées dans au moins un module de simulation de processus (9) et au moins un module d'optimisation de processus (9),
- des données de processus de mesure actuelle et/ou historiques sont fournies par le biais d'au moins une interface (11) par une couche de gestion d'informations (7) coopérant avec les modules (9) pour déterminer des valeurs caractéristiques et/ou de fonctionnement pour les modules (9) de simulation de processus et d'optimisation de processus,
- les valeurs caractéristiques et/ou de fonctionnement déterminées dans les modules (9) à partir des données de processus de mesure actuelle et/ou historiques comprennent des valeurs caractéristiques spécifiques des installations de production de courant et de dessalement ou une combinaison de ces valeurs caractéristiques,
- et les valeurs caractéristiques et/ou de fonctionnement déterminées dans les modules (9) à partir des données de processus de mesure actuelle et/ou historiques sont délivrées à la couche de gestion d'informations (7) en vue d'un traitement supplémentaire en tenant compte des composantes stockées,
**caractérisé en ce que**
- des horaires optimisés pour les unités (2, 5) et/ou pour l'ensemble de l'installation sont déterminés au moyen d'un module de planification de déploiement (8) coopérant également avec la couche de gestion d'informations,
- les modules (9) de simulation de processus et d'optimisation de processus utilisent des résultats actuels du module de planification de déploiement (8) et inversement,
- deux ou plusieurs technologies de traitement différentes pour le dessalement de l'eau sont utilisées dans l'installation, des qualités d'eau et des quantités d'eau différentes étant produites au moyen des différentes technologies de traitement, et
- une composante de mélange de l'eau est prise en compte dans le module de planification de déploiement (8) pour l'optimisation d'un processus de mélange de l'eau afin que les unités (2, 5) respectent des limites prédéterminées de qualité d'eau correspondant à l'installation de production de courant et de dessalement de l'eau et qu'elles produisent ainsi une eau dont la qualité se situe entre les limites définies.

17. Procédé selon la revendication 16, **caractérisé en ce que** des spécifications de point de fonctionnement optimales sont déterminées au moyen des modules de simulation de processus et d'optimisation de processus (9) pour des valeurs de fonctionnement caractéristiques des unités (2, 5) et/ou de l'ensemble de l'installation technique.

18. Procédé selon l'une quelconque des revendications 16 à 17, **caractérisé en ce que** des bibliothèques comportant des composantes destinées à différentes configurations d'installation sont stockées dans les modules de planification de déploiement (8), d'optimisation de processus et de simulation de processus (9).

19. Procédé selon la revendication 18, **caractérisé en ce que** les bibliothèques des modules de planification de déploiement (8), de simulation de processus et d'optimisation de processus (9) sont facultativement étendues et/ou modifiées.

20. Procédé selon l'une quelconque des revendications 16 à 19, **caractérisé en ce qu'**une détermination de valeurs caractéristiques de puissance est effectuée pendant le fonctionnement de l'installation technique au moyen d'un module de surveillance de processus (10) coopérant avec la couche de gestion d'informations (7).

21. Procédé selon l'une quelconque des revendications 16 à 20, **caractérisé en ce qu'**une prédiction de données de processus est effectuée au moyen d'un module de prédiction (16) coopérant avec la couche de gestion d'informations (7).

22. Procédé selon l'une quelconque des revendications 16 à 21, **caractérisé en ce que** les modules (8, 9, 10, 16) sont connectés par l'intermédiaire d'interfaces normalisées ou d'interfaces propriétaires à la couche de gestion d'informations (7).

23. Système selon l'une quelconque des revendications 16 à 22, **caractérisé en ce que** les valeurs caractéristiques et/ou de fonctionnement sont déterminées au moyen de la couche de gestion d'informations (7) ou des modules (8, 9, 10, 16) reliés à la couche de gestion d'informations (7) pour la planification de déploiement, l'optimisation, la simulation et la surveillance de processus de l'installation technique.

24. Procédé selon l'une quelconque des revendications 16 à 23, **caractérisé en ce que** les unités respectives et/ou des unités (2, 5) combinées les unes aux autres sont **caractérisées par** les valeurs caractéristiques et/ou de fonctionnement déterminées dans les modules (8, 9, 10, 16).

25. Procédé selon l'une quelconque des revendications 16 à 24, **caractérisé en ce que** la détermination des valeurs caractéristiques et/ou de fonctionnement est activée en fonction d'événements, de manière cyclique et/ou manuellement.

26. Procédé selon l'une quelconque des revendications 16 à 25, **caractérisé en ce qu'**avec les valeurs caractéristiques et/ou de fonctionnement déterminées, des exigences de charge modifiées pour les unités (2, 5) de l'installation technique, la panne et/ou la remise en état d'unités (2, 5) de l'installation technique et/ou une reconversion d'un but de production et/ou de nouveaux plans de déploiement établis sont pris en compte.

27. Procédé selon l'une quelconque des revendications 16 à 26, **caractérisé en ce que** des données de processus de mesure actuelle et/ou historiques sont fournies au moyen de la couche de gestion d'informations (7) pour la détermination de la valeur caractéristique de puissance.

28. Procédé selon l'une quelconque des revendications 16 à 27, **caractérisé en ce que** les données de processus de mesure actuelle et historiques sont transférées au moyen de la couche de gestion d'informations (7) pour déterminer les valeurs caractéristiques et/ou de fonctionnement dans les modules (8, 9, 10, 16) et les valeurs caractéristiques et/ou de fonctionnement déterminées dans les modules (8, 9, 10, 16) sont délivrées à la couche de gestion d'informations (7) en vue d'un traitement supplémentaire.

29. Procédé selon l'une quelconque des revendications 16 à 28, **caractérisé en ce que** les valeurs caractéristiques et/ou de fonctionnement déterminées sont visualisées au moyen d'au moins un module d'affichage, sont archivées et/ou sont documentées.

30. Procédé selon l'une quelconque des revendications 16 à 29, **caractérisé en ce que** les valeurs caractéristiques et/ou de fonctionnement sont analysées au moyen de la couche de gestion d'informations (7) ou du module de surveillance de processus (10).

31. Utilisation du système selon l'une quelconque des revendications 1 à 15 pour optimiser le point de fonctionnement lors de dégradations se produisant dans l'installation de production de courant et/ou l'installation de dessalement de l'eau ou dans d'autres conditions ambiantes, pour optimiser le nombre des processus de démarrage et d'arrêt des installation de production de courant et de dessalement de l'eau et/ou pour optimiser le stockage d'eau dessalée produite.
